# EUROPEAN PATENT SPECIFICATION

(11) **EP 3 722 598 B1**
(45) Date of publication and mention of the grant of the patent: **21.09.2022**
(21) Application number: 20155724.6
(22) Date of filing: 05.02.2020
(51) Int. Cl.: F03D 7/04, F03D 7/02

(54) **WIND TURBINE GROUP POWER GENERATION AMOUNT EVALUATION DEVICE, WIND TURBINE GROUP POWER GENERATION AMOUNT EVALUATION METHOD, AND PROGRAM**
VORRICHTUNG ZUR BEWERTUNG DER ENERGIEERZEUGUNGSMENGE EINER WINDTURBINE, VERFAHREN ZUR BEWERTUNG DER ENERGIEERZEUGUNGSMENGE EINER WINDTURBINE UND PROGRAMM
DISPOSITIF D'ÉVALUATION DE LA QUANTITÉ DE GÉNÉRATION D'ÉNERGIE DE GROUPE D'ÉOLIENNES, PROCÉDÉ D'ÉVALUATION DE LA QUANTITÉ DE GÉNÉRATION D'ÉNERGIE DE GROUPE D'ÉOLIENNES ET PROGRAMME

(30) Priority: 09.04.2019 JP 2019074053
(43) Date of publication of application: 14.10.2020
(73) Proprietor: Mitsubishi Heavy Industries, Ltd., Tokyo 100-8332 (JP)
(72) Inventor: IKAWA, Yoshikatsu, Tokyo, 100-8332 (JP); HASHIMOTO, Masayuki, Tokyo, 100-8332 (JP); IDE, Kazunari, Tokyo, 100-8332 (JP); YUGE, Atsushi, Tokyo, 100-8332 (JP)
(74) Representative: Henkel & Partner mbB

(56) References cited:
- JP-A- 2018 109 367
- US-A1- 2017 284 368
- US-A1- 2018 320 667
- US-A1- 2018 335 019

## Description

### TECHNICAL FIELD

The present disclosure relates to an evaluation of a power generation amount of a wind turbine group.

### BACKGROUND

Conventionally, in a wind farm where power is generated with a plurality of wind turbine power generating apparatuses (to be referred to as wind turbines hereinafter), compared to front wind turbines disposed on the upwind side, the back wind turbines disposed on the downwind side normally have smaller power generation outputs due to the influence of wake of the front wind turbines. Thus, various operation methods and control methods are proposed in order to optimize the output of the entire wind farm, which is the sum of power generation outputs produced by the respective wind turbines (for example, see Patent Document 1).

### Citation List

### Patent Literature

Patent Document 1: JP2018-109367A
Patent Document 2: US 2018/320667 A1

### SUMMARY

In order to optimize power generation amounts of at least some wind turbine groups of a wind farm, it is considered that a change in set value of a parameter influencing an output (output control parameter) is made on each of at least some wind turbines, and power generation amounts measured before and after the change are compared. However, it may be impossible to appropriately make an evaluation if wind conditions are different before and after the change. Moreover, while a power generation amount depends on a wind direction/wind speed, a wind vane anemometer installed above a nacelle of a wind turbine may not be accurate enough to appropriately evaluate such power generation amounts.

In view of the above, an object of at least one embodiment of the present invention is to provide a wind turbine group power generation amount evaluation device capable of appropriately evaluating a power generation amount by a wind turbine group.

Accordingly, the object is solved by the independent claim 1. Advantageous developments are defined in claims 2 to 7.
(1) A wind turbine group power generation amount evaluation device according to at least one embodiment of the present invention is a wind turbine group power generation amount evaluation device for evaluating a power generation amount of a wind turbine group including a plurality of wind turbines, the wind turbine group power generation amount evaluation device including a wind direction acquisition unit configured to acquire a wind direction acting on the wind turbine group, a criterial correlation acquisition unit configured to acquire a criterial correlation which is a correlation between a target power generation amount by a target wind turbine group and a reference power generation amount by a reference wind turbine group, the target wind turbine group being the wind turbine group of an evaluation target having, as members, n (n is an integer greater than or equal to 2) wind turbines disposed along the acquired wind direction, the reference wind turbine group having, as members, the wind turbines which are not the members of the target wind turbine group and are disposed along the wind direction, a set value changing unit configured to change a set value of an output control parameter of at least one of the wind turbines in the target wind turbine group, a power generation amount acquisition unit configured to acquire the target power generation amount and the reference power generation amount measured after the change in the set value, a target power generation amount estimation unit configured to calculate, based on the criterial correlation and the reference power generation amount acquired after the change, an estimated value before the change of the target power generation amount which corresponds to the reference power generation amount acquired after the change, and an evaluation unit configured to evaluate a target power generation amount after the change based on a comparison between the target power generation amount after the change and the estimated value before the change.

With the above configuration (1), an evaluation is made as to, for example, whether the power generation amount of the target wind turbine group in a case in which the output control parameter of the wind turbine (for example, the wind turbine positioned on the upwind side) belonging to the target wind turbine group which is the wind turbine group of the evaluation target is changed (target power generation amount after the change) is larger than the target power generation amount obtained before the change by using the correlation (criterial correlation) between the target power generation amount before the change and the reference power generation amount of the reference wind turbine group disposed in Parallel to the target wind turbine group.

That is, the target power generation amount and the reference power generation amount each measured, for example, at the same time after the change of the output control parameter described above are measured under the same wind condition. In addition, likewise, the criterial correlation is the correlation between the target power generation amount and the reference power generation amount measured under the same wind condition before the change of the output control parameter described above. Accordingly, using the criterial correlation, it is possible to estimate the target power generation amount before the above-described change, which may be obtained under the wind condition when the reference power generation amount acquired after the above-described change is measured. Therefore, it is possible to evaluate that the estimated value before the change of the target power generation amount thus obtained before the change and the measurement value of the target power generation amount after the change are the power generation amounts on the same wind condition. Thus, comparing the both, it is possible to easily evaluate how the target power generation amount after the change is as compared with that before the change without obtaining a power generation amount from a measured wind speed.

(2) In some embodiments, in the above configuration (1), the set value changing unit changes the set value of the output control parameter of at least one of the wind turbines positioned on an upwind side in the wind direction in the target wind turbine group.

With the above configuration (2), the wind turbine whose output control parameter is to be changed is one or the plurality of wind turbines positioned on the upwind side, for example, the wind turbine positioned on the most upwind side in the target wind turbine group. Compared to the front wind turbines disposed on the upwind side, the back wind turbines disposed on the downwind side normally have a smaller power generation output due to the influence of wake of the front wind turbines. Moreover, it is known that each wind turbine generates power most efficiently in the region positioned midway between the cut-in wind speed and the rated wind speed. Thus, if the power generation amount of the front wind turbines is, for example, decreased, the back wind turbines can utilize more wind energy by the decreased power generation amount of the front wind turbines. Accordingly, the power generation amount of each of the wind turbines changes, making it possible to achieve optimization of the power generation amount of the target wind turbine group, such as maximization of the target power generation amount, through such adjustment of the power generation amount.

(3) In some embodiments, in the above configuration (1) and (2), the wind turbine group power generation amount evaluation device further includes a criterial correlation generation unit configured to generate the criterial correlation for each of a plurality of combinations of the target wind turbine group and the reference wind turbine group each having the members determined in advance in accordance with a corresponding one of a plurality of wind directions, and the criterial correlation acquisition unit acquires the criterial correlation with respect to the combinations according to the acquired wind direction.

With the above configuration (3), the combinations of the target wind turbine group and the reference wind turbine group are determined with respect to the plurality of assumed wind directions, the criterial correlation for each of the combinations is generated, and the above-described evaluation is made by using the criterial correlation according to the acquired wind direction. Thus, it is possible to quickly make the above-described evaluation according to the wind direction.

(4) In some embodiments, in the above configuration (1) to (3), the wind turbine group power generation amount evaluation device further includes a criterial correlation generation unit configured to generate the criterial correlation for each of a plurality of combinations of the target wind turbine group and the reference wind turbine group each having the members determined in accordance with a corresponding one of a plurality of wind directions, and a wind direction change detection unit configured to detect a change in the wind direction, and if the change in the wind direction is detected, the criterial correlation acquisition unit acquires the criterial correlation according to the wind direction after the change.

With the above configuration (4), it is possible to acquire the criterial correlation between the target power generation amount of the reference wind turbine group and the target power generation amount of the target wind turbine group according to the changed wind direction which is, for example, determined in advance in accordance with the change in the wind direction. Thus, triggered by the change in the wind direction, it is possible to evaluate the target power generation amount by the target wind turbine group described above.

(5) In some embodiments, in any one of the above configurations (1) to (4), the wind turbine group power generation amount evaluation device further includes a setting adoption unit configured to specify, based on an evaluation result of the evaluation unit, a position of a setting change wind turbine and to change a set value of the output control parameter of the wind turbine in the reference wind turbine group corresponding to the specified position to the set value after the setting change wind turbine is changed, the setting change wind turbine being the wind turbine whose set value of the output control parameter is changed in the target wind turbine group.

With the above configuration (5), as a result of the evaluation by the evaluation unit, if the evaluation unit evaluates that the target power generation amount by the target wind turbine group is increased by changing the output control parameter, the set value of the wind turbine in the reference wind turbine group at a position corresponding to the position of the setting change wind turbine in the target wind turbine group is changed in the same manner as the setting change wind turbine. Thus, it is also possible to optimize the power generation amount of the reference wind turbine group in the same manner as the target wind turbine group.

(6) A wind turbine group power generation amount evaluation method according to at least one embodiment of the present invention is a wind turbine group power generation amount evaluation method of evaluating a power generation amount of a wind turbine group including a plurality of wind turbines, the method including a step of acquiring a wind direction acting on the wind turbine group, a step of acquiring a criterial correlation which is a correlation between a target power generation amount by a target wind turbine group and a reference power generation amount by a reference wind turbine group, the target wind turbine group being the wind turbine group of an evaluation target having, as members, n (n is an integer greater than or equal to 2) wind turbines disposed along the acquired wind direction, the reference wind turbine group having, as members, the wind turbines which are not the members of the target wind turbine group and are disposed along the wind direction, a step of changing a set value of an output control parameter of at least one of the wind turbines in the target wind turbine group, a step of acquiring the target power generation amount and the reference power generation amount measured after the change in the set value, a step of calculating, based on the criterial correlation and the reference power generation amount acquired after the change, an estimated value before the change of the target power generation amount which corresponds to the reference power generation amount acquired after the change, and a step of evaluating a target power generation amount after the change based on a comparison between the target power generation amount after the change and the estimated value before the change.

With the above configuration (6), it is possible to achieve the same effect as the above configuration (1).

(7) A wind turbine group power generation amount evaluation program according to at least one embodiment of the present invention is a wind turbine group power generation amount evaluation program for evaluating a power generation amount of a wind turbine group including a plurality of wind turbines, the program causing a computer to implement a unit configured to acquire a wind direction acting on the wind turbine group, a unit configured to acquire a criterial correlation which is a correlation between a target power generation amount by a target wind turbine group and a reference power generation amount by a reference wind turbine group, the target wind turbine group being the wind turbine group of an evaluation target having, as members, n (n is an integer greater than or equal to 2) wind turbines disposed along the acquired wind direction, the reference wind turbine group having, as members, the wind turbines which are not the members of the target wind turbine group and are disposed along the wind direction, a unit configured to change a set value of an output control parameter of at least one of the wind turbines in the target wind turbine group, a unit configured to acquire the target power generation amount and the reference power generation amount measured after the change in the set value, a unit configured to calculate, based on the criterial correlation and the reference power generation amount acquired after the change, an estimated value before the change of the target power generation amount which corresponds to the reference power generation amount acquired after the change, and a unit configured to evaluate a target power generation amount after the change based on a comparison between the target power generation amount after the change and the estimated value before the change.

With the above configuration (7), it is possible to achieve the same effect as the above configuration (1).

According to at least one embodiment of the present invention, a wind turbine group power generation amount evaluation device is provided, which is capable of appropriately evaluating a power generation amount by a wind turbine group.

### BRIEF DESCRIPTION OF DRAWINGS

FIG. 1 is a schematic view of a wind farm according to an embodiment of the present invention.
FIG. 2 is a schematic view showing a configuration example of a wind turbine according to an embodiment of the present invention.
FIG. 3 is a functional block diagram of a wind turbine group power generation amount evaluation device according to an embodiment of the present invention.
FIG. 4 is a view of a target wind turbine group and a reference wind turbine group when a wind direction is from the southwest according to an embodiment of the present invention.
FIG. 5 is a view of the target wind turbine group and the reference wind turbine group when the wind direction is from the south according to an embodiment of the present invention.
FIG. 6 is a graph of a criterial correlation according to an embodiment of the present invention, where the abscissa indicates a reference power generation amount Pr, and the ordinate indicates a target power generation amount Pt.
FIG. 7 is a flowchart of pre-processing according to an embodiment of the present invention.
FIG. 8 is a flowchart of a wind turbine group power generation amount evaluation method according to an embodiment of the present invention.

### DETAILED DESCRIPTION

Some embodiments of the present invention will now be described in detail with reference to the accompanying drawings. It is intended, however, that unless particularly identified, dimensions, materials, shapes, relative positions and the like of components described in the embodiments or shown in the drawings shall be interpreted as illustrative only and not intended to limit the scope of the present invention.

For instance, an expression of relative or absolute arrangement such as "in a direction", "along a direction", "Parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

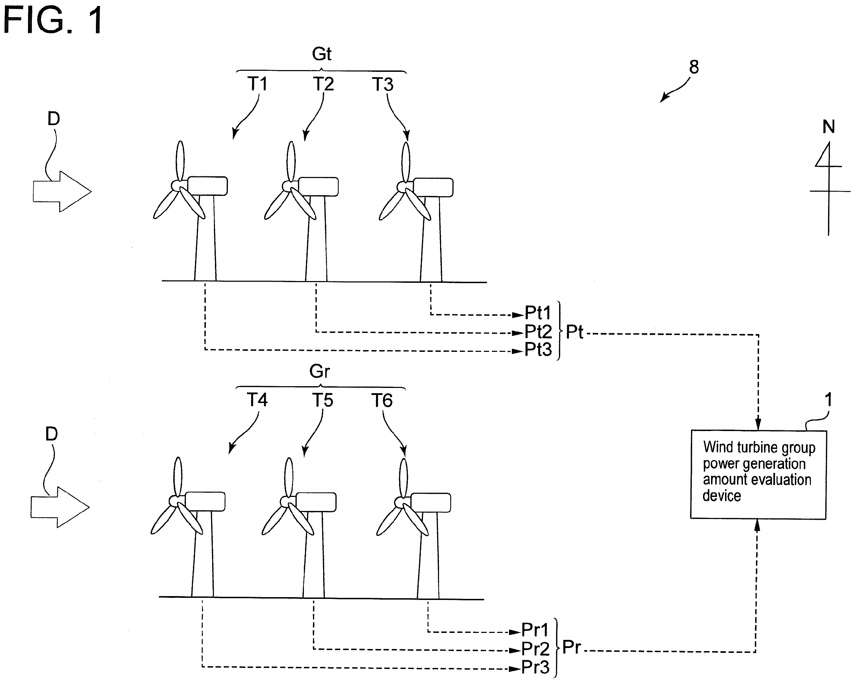

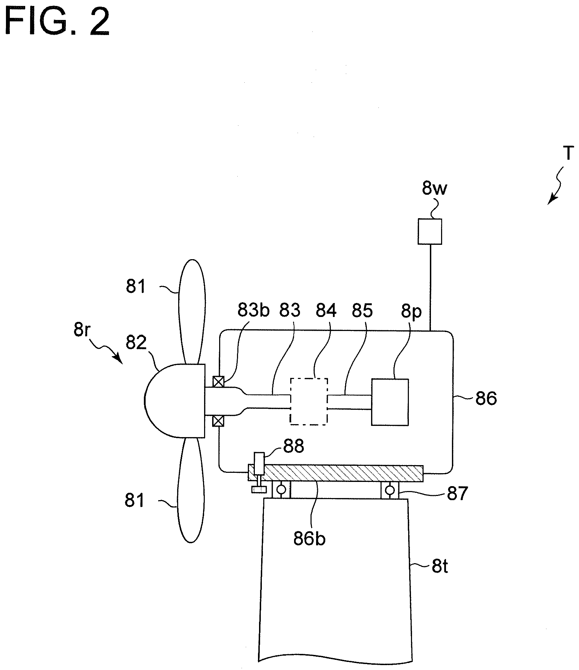

FIG. 1 is a schematic view of a wind farm 8 according to an embodiment of the present invention. FIG. 2 is a schematic view showing a configuration example of a wind turbine T according to an embodiment of the present invention.

As shown in FIG. 1, the wind farm 8 includes the plurality of wind turbines T. As shown in FIG. 2, each of the wind turbines T (T1 to T6) may include a rotor 8r constituted by a plurality of blades 81 and a hub 82 to which the blades 81 are mounted, a main shaft 83 coupled to the hub 82, and a generator 8p driven in response to the rotational force of the main shaft 83. In some embodiment, the main shaft 83 and the generator 8p may be coupled via a drive train 84 and an output shaft 85 thereof. In some embodiments, the drive train 84 may include a gear type speed increasing unit which increases the rotation speed of the main shaft 83. In some embodiments, the drive train 84 may include a hydraulic transmission instead of the gear type speed increasing unit. In another embodiment, instead of the drive train 84, a direct drive method may be employed, in which the main shaft 83 and the generator 8Pare directly connected.

The drive train 84 and the generator 8p may be housed inside a nacelle 86 rotatably supporting the main shaft 83 via a main shaft bearing 83b. A nacelle base plate 86b forms the bottom surface of the nacelle 86, and may be supported by a tower 8t via a yaw rotational bearing 87. A yaw rotational mechanism 88 including a yaw motor (not shown) and a pinion gear may be fixed to the nacelle base plate 86b. The nacelle 86 may be rotatable relative to the tower 8t by driving the yaw motor (not shown) in a state where the pinion gear of the yaw rotational mechanism 88 is engaged with the ring gear disposed on the side of the tower 8t. Furthermore, each of the blades 81 is supported on the hub 82 via a blade rotational bearing (not shown), and the pitch angle may be adjustable by a pitch drive actuator (not shown) disposed inside the hub 82. In addition, an anemoscope 8w may be installed on the wind turbine T.

In the embodiment shown in FIG. 1, the number of wind turbines T of the wind farm 8 is six. Then, the six wind turbines T are arranged such that there are two rows of the three wind turbines T disposed along an east-west direction. In a north-south direction, the six wind turbines T are arranged such that there are three rows of the two wind turbines T disposed along the north-south direction. The number of wind turbines constituting the wind farm 8 is not limited to six and may be an arbitrary number not less than four. For example, in FIG. 1, one or more wind turbines T may exist on a farther east side or west side of at least one of the wind turbine T indicated by T3 or T4. Alternatively, another wind turbine T may exist on the north side or the south side of the at least one illustrated wind turbine T.

Then, the above-described wind farm 8 further includes a wind turbine group power generation amount evaluation device 1, as shown in FIG. 1. The wind turbine group power generation amount evaluation device 1 is a device for evaluating a power generation amount of a wind turbine group including the plurality of wind turbines T. More specifically, although a wind flow direction can change on a moment-to-moment basis, a wind turbine group is set which has, as members, the plurality of wind turbines T disposed along a wind direction D when a power generation amount is evaluated, and a power generation amount by the wind turbine group (a target wind turbine group Gt to be described later) is evaluated.

In wind turbine groups where the plurality of wind turbines T thus form the rows along the wind direction D, if other wind turbines (front wind turbines) exist on the upwind side, wind energy to be obtained by each of the wind turbines T is lower than that of the front wind turbines due to the influence of wake. Therefore, for example, rated outputs cannot be obtained from back wind turbines positioned at the back along the front wind turbines even if rated outputs are obtained from the front wind turbines, which may result in smaller outputs. At this time, the wind turbines T generate power most efficiently in a region positioned midway between a cut-in wind speed (a wind speed at which power generation is started) and a rated wind speed (a wind speed at which a rated output is reached). Thus, for example, if a parameter influencing the output of the front wind turbines (to be referred to as an output control parameter S hereinafter) is changed (adjusted) so that the back wind turbines can obtain more wind energy, the output of the back wind turbines may increase more, despite a possible decrease in the output of the front wind turbines. As a result, it is possible to optimize the wind turbine groups as a while, such as a power generation amount by the entire wind turbine groups increases more.

However, even if power generation amounts by the wind turbine group before and after the above-described output control parameter S is changed (to be simply referred to as after change, as needed, hereinafter) are compared to confirm an effect by the change, wind conditions such as a wind speed may change before and after the change. Accordingly, even if the power generation amount by the wind turbine group after the change of the above-described output control parameter S is larger than that before the change, it is difficult to determine whether this is due to the change of the output control parameter S or the change of the wind conditions. Thus, a wind turbine group (to be referred to as a reference wind turbine group Gr hereinafter) is set which has, as members, the plurality of other wind turbines T disposed along the same wind direction D used to determine the members of the wind turbine group of an evaluation target (to be referred to as the target wind turbine group Gt), which is the above-described wind turbine group including the wind turbines T each undergoing the change of the output control parameter S. With reference to the reference wind turbine group Gr, an evaluation is made as to how the power generation amount by the target wind turbine group Gt after the change of the output control parameter S is, as compared with that before the change. At this time, with regard to the reference wind turbine group Gr, the output control parameter S is not changed.

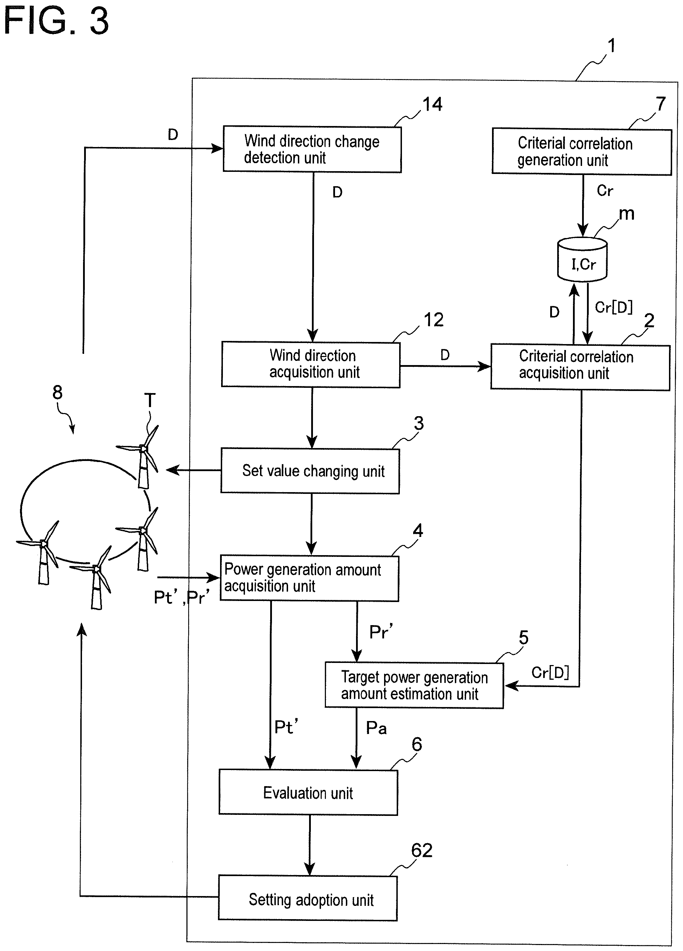

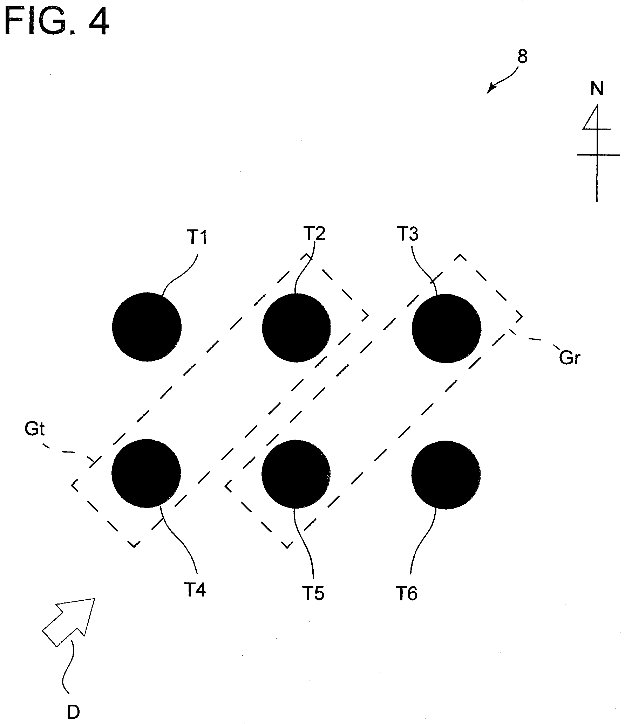

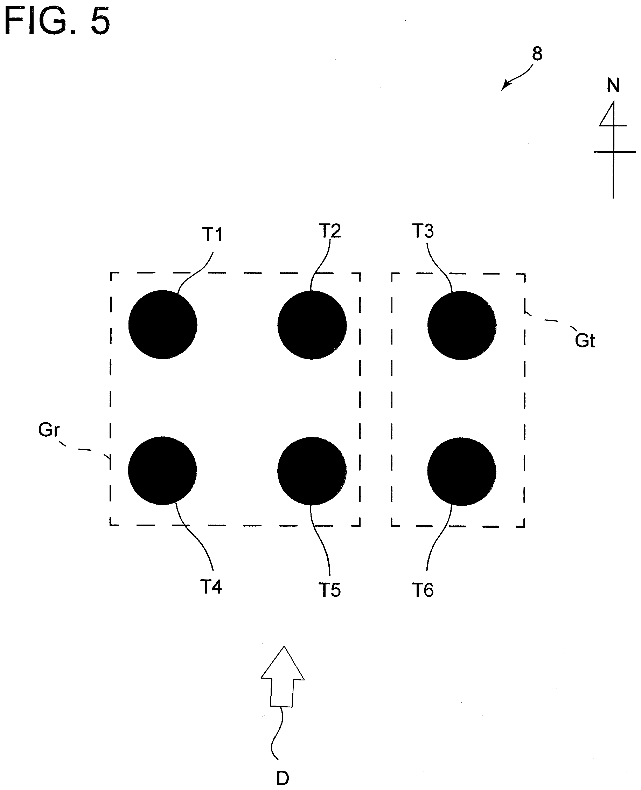

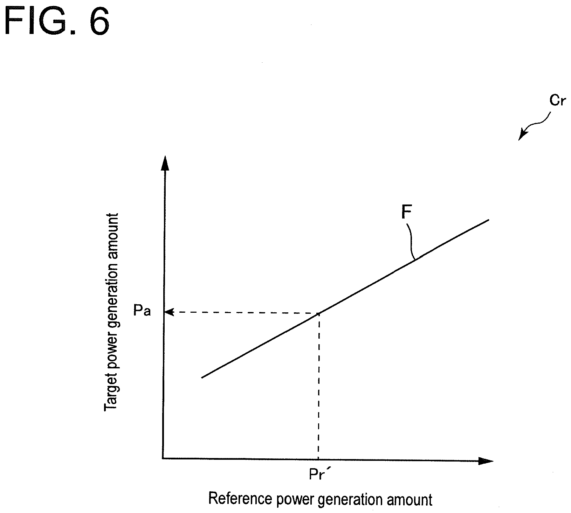

Hereinafter, the wind turbine group power generation amount evaluation device 1 for making the above-described evaluation will be described with reference to FIGS. 1 to 6. FIG. 3 is a functional block diagram of the wind turbine group power generation amount evaluation device 1 according to an embodiment of the present invention. FIG. 4 is a view of the target wind turbine group Gt and the reference wind turbine group Gr when the wind direction is from the southwest according to an embodiment of the present invention. FIG. 5 is a view of the target wind turbine group Gt and the reference wind turbine group Gr when the wind direction is from the south according to an embodiment of the present invention. Moreover, FIG. 6 is a graph of a criterial correlation Cr according to an embodiment of the present invention, where the abscissa indicates a reference power generation amount Pr, and the ordinate indicates a target power generation amount Pt.

As shown in FIG. 3, the wind turbine group power generation amount evaluation device 1 includes a wind direction acquisition unit 12, a criterial correlation acquisition unit 2, a set value changing unit 3, a power generation amount acquisition unit 4, a target power generation amount estimation unit 5, and an evaluation unit 6. Each of the above-described function units will be described.

The wind turbine group power generation amount evaluation device 1 may comprise, for example, a computer including a CPU (processor, not shown) and a storage device m, for example, memories such as ROM and RAM. Then, the CPU operates (computes data, for example) in accordance with an instruction of a program (wind turbine group power generation amount evaluation program) loaded into a main storage device, implementing the respective functional units to be described later of the wind turbine group power generation amount evaluation device 1.

The wind direction acquisition unit 12 is the functional unit configured to acquire the wind direction D which acts on the wind turbine groups including the target wind turbine group Gt and the reference wind turbine group Gr described above. More specifically, the wind direction acquisition unit 12 is connected to the anemoscope 8w which is installed on the wind turbine T and is used to measure the wind direction D, and acquires a measurement value of the wind direction D measured by the anemoscope. As shown in FIG. 2, the anemoscope 8w may be installed above the nacelle 86.

The criterial correlation acquisition unit 2 is the functional unit configured to acquire the criterial correlation Cr which is a correlation between the target power generation amount Pt by the target wind turbine group Gt according to the wind direction D acquired by the above-described wind direction acquisition unit 12 and the reference power generation amount Pr by the reference wind turbine group Gr according to the said wind direction D. The target wind turbine group Gt is the wind turbine group of the evaluation target which has, as the members, the n (n is an integer greater than or equal to 2) wind turbines T disposed along the wind direction D acquired as described above. The target power generation amount Pt is a power generation amount by all the wind turbines T belonging to the target wind turbine group Gt. Moreover, the reference wind turbine group Gr is the wind turbine group having, as the members, the same number (n) of wind turbines T as the target wind turbine group Gt which are not the members of the target wind turbine group Gt and are disposed along the wind direction D acquired as described above. The reference power generation amount Pr is a power generation amount by all the wind turbines T belonging to the reference wind turbine group Gr.

More specifically, the number of members of the target wind turbine group Gt and the number of members of the reference wind turbine group Gr may be the same or different. However, the number of members disposed along the wind direction D is the same. Furthermore, the target wind turbine group Gt and the reference wind turbine group Gr are determined in accordance with the wind direction D. For example, in the embodiment shown in FIG. 1, the wind direction D is from the west (the left of the drawing), and the two rows of the three wind turbines T disposed from the west to the east (three wind turbines T × two rows = six wind turbines T in total) exist in the wind farm 8. Then, of the six wind turbines T, one row (north side) of the three wind turbines T disposed along the wind direction D from the west forms the target wind turbine group Gt, and the other row (south side) of the three wind turbines T disposed along the same wind direction D from the west forms the reference wind turbine group Gr. Moreover, the target power generation amount Pt is a total of power generation amounts (Pt = Pt1 + Pt2 + Pt3) by the respective wind turbines T (T1 to T3) which are the members of the target wind turbine group Gt, and the reference power generation amount Pr is a total of power generation amounts (Pr = Pr1 + Pr2 + Pr3) by the respective wind turbines T (T4 to T6) which are the members of the reference wind turbine group Gr.

If the wind direction D is from the southwest as shown in FIG. 4, the two wind turbines T are disposed from the southwest to the northeast, and there are two rows of the said two wind turbines T. The two wind turbines T of one of the two rows form the target wind turbine group Gt (a western wind turbine group in FIG. 4), and the two wind turbines T of the other of the two rows form the reference wind turbine group Gr. In addition, if the wind direction D is from the south as shown in FIG. 5, the two wind turbines T are disposed from the south to the north, and there are three rows of the said two wind turbines T. The two wind turbines T of one of the three rows may form the target wind turbine group Gt (an easternmost wind turbine group in FIG. 5), and the total of four wind turbines T of the other two of the three rows may form the reference wind turbine group Gr. In FIG. 5, the four wind turbines T forming the two rows are the members of the reference wind turbine group Gr. However, the two wind turbines T of the four wind turbines T which form the row closer to the target wind turbine group Gt (a wind turbine group forming a center row in FIG. 5) may be the members of the reference wind turbine group Gr.

Moreover, the above-described criterial correlation Cr is obtained by measuring the respective power generation amounts (Pt, Pr) of the target wind turbine group Gt and the reference wind turbine group Gr determined as described above at a timing when the wind conditions can be regarded as the same (for example, the same time). More specifically, a plurality of data are generated which associate the reference power generation amount Pr and the target wind turbine group Gt measured at the same timing. Each of the data is a result of the target power generation amount Pt obtained when the certain reference power generation amount Pr is obtained. A regression analysis (such as a least-square method) is performed on such a plurality of result data, generating a function F (Pt = F(Pr))to calculate the target power generation amount Pt from the arbitrary reference power generation amount Pr, as shown in FIG. 6. A known machine learning method may be used to derive the criterial correlation Cr as represented by the function F generated by the regression analysis or the like.

The set value changing unit 3 is the functional unit configured to change a set value of the output control parameter S of at least one wind turbine T in the above-described target wind turbine group Gt. A change value of the output control parameter S may be input by a worker or may automatically be generated by the set value changing unit 3 with a predetermined logic. Furthermore, the output control parameter S may be, for example, at least one of a power generation output command value, a pitch angle, or a yaw angle.

More specifically, in some embodiments, the wind farm 8 may include a control device (not shown) capable of changing the set value of the output control parameter S of each of the wind turbines T. Then, the set value changing unit 3 is connected to the control device by wire or wireless. The set value changing unit 3 may output (communicate) the change value of the output control parameter S with respect to the desired wind turbine T to the control device (not shown), thereby changing the set value of the output control parameter S of the arbitrary wind turbine T to the change value. In some other embodiments, the set value changing unit 3 may be configured to output a message to prompt a change in the set value of the output control parameter S on a screen such as a display and to cause the worker to make the above-described change. In this case, a next process by the power generation amount acquisition unit 4 may be performed after receiving an input that the above-described change is made from the worker.

The power generation amount acquisition unit 4 is the functional unit configured to acquire the target power generation amount Pt (to be referred to as a target power generation amount Pt' after the change hereinafter) and the reference power generation amount Pr (to be referred to as a reference power generation amount Pr' after the change) each measured after the set value of the output control parameter S described above is changed. The target power generation amount Pt' after the change and the reference power generation amount Pr' after the change are measurement values each measured at the timing, such as the same time, when the wind conditions can be regarded as the same. In the embodiments shown in FIGS. 1 to 3, outputs (indicated by kW, for example) or electric energies (indicated by kW, for example) of the wind turbines T can be measured individually. Then, the measurement values of the wind turbines T which are the members of the target wind turbine group Gt and the reference wind turbine group Gr are acquired to be summed for each of the target wind turbine group Gt and the reference wind turbine group Gr, thereby acquiring the target power generation amount Pt and the reference power generation amount Pr.

The target power generation amount estimation unit 5 is the functional unit configured to calculate, based on the above-described criterial correlation Cr and the reference power generation amount Pr' after the change acquired by the above-described power generation amount acquisition unit 4 after the above-described change, an estimated value of the target power generation amount Pt corresponding to the reference power generation amount Pr' after the change (to be referred to as an estimated value before the change Pa). At this time, the output control parameter S of at least one wind turbine T which is the member of the target wind turbine group Gt is changed, whereas the output control parameter S of each of the wind turbines T which is the member of the reference wind turbine group Gr is not changed. Moreover, the criterial correlation Cr indicates the relationship between the reference power generation amount Pr and the target power generation amount Pt before the change of the above-described output control parameter S. Thus, using the criterial correlation Cr, it is possible to calculate the target power generation amount Pt (estimated value) obtained before the change of the output control parameter S with respect to the arbitrary reference power generation amount Pr.

Accordingly, the target power generation amount Pt (Pa) obtained by, for example, substituting the reference power generation amount Pr by the reference wind turbine group Gr having, as the members, the wind turbines T without the change of the output control parameter S into the above-described function F (see FIG. 6) is the estimated value before the change Pa of the target power generation amount Pt which may be obtained from the target wind turbine group Gt before the above-described output control parameter S is changed, if the above-described reference power generation amount Pr' after the change is obtained by the reference wind turbine group Gr. Therefore, it is possible to compare the target power generation amount Pt' after the change and the estimated value before the change Pa as the power generation amounts under the same wind condition, even if the wind conditions change before and after the change of the output control parameter S described above.

The evaluation unit 6 is the functional unit configured to evaluate the target power generation amount Pt' after the change of the output control parameter S based on the comparison between the target power generation amount Pt' after the change and the estimated value before the change Pa. More specifically, the evaluation unit 6 evaluates whether the above-described target power generation amount Pt' after the change is larger than the estimated value before the change Pa corresponding to the target power generation amount Pt before the change. That is, the evaluation unit 6 can evaluate that the target power generation amount Pt by the target wind turbine group Gt is increased by the change of the output control parameter S, if the target power generation amount Pt' after the change is larger than the estimated value before the change Pa (Pr' > Pa). Conversely, the evaluation unit 6 can evaluate that the target power generation amount Pt by the target wind turbine group Gt is unchanged (in the case of Pr' = Pa) or is decreased (in the case of Pr' < Pa) by the change of the output control parameter S, if the target power generation amount Pt' after the change is not more than the estimated value before the change Pa (Pr' ≤ Pa).

Then, as a result of the evaluation by the wind turbine group power generation amount evaluation device 1 described above, if the evaluation unit 6 evaluates that the target power generation amount Pt by the target wind turbine group Gt is increased by the change of the output control parameter S, the output control parameter S may also be changed in the same manner with respect to the reference wind turbine group Gr. In the embodiments shown in FIGS. 1 to 3, the wind turbine group power generation amount evaluation device 1 further includes a setting adoption unit 62 which specifies, based on the evaluation result of the evaluation unit 6 described above, the position of at least one wind turbine T or the respective positions of the plurality of wind turbines with the set value of the output control parameter S being changed in the target wind turbine group Gt (setting change wind turbine), and changes the set value of the output control parameter S of the wind turbine T in the reference wind turbine group Gr corresponding to the specified position in the same manner as the setting change wind turbine. The setting adoption unit 62 may automatically perform such setting change with respect to the reference wind turbine group Gr. Alternatively, the setting adoption unit 62 may ask an operator's permission by displaying a message on the screen or the like before performing the above-described setting change and may perform the setting change upon receiving an input of the operator's permission.

With the above configuration, the evaluation is made as to, for example, whether the power generation amount of the target wind turbine group Gt in the case in which the output control parameter S of the wind turbine (for example, the wind turbine positioned on the upwind side) belonging to the target wind turbine group Gt which is the wind turbine group of the evaluation target is changed (target power generation amount Pt' after the change) is larger than the target power generation amount Pt obtained before the change of the output control parameter S by using the correlation (criterial correlation Cr) between the target power generation amount Pt before the change and the reference power generation amount Pr of the reference wind turbine group Gr disposed in Parallel to the target wind turbine group Gt.

That is, the target power generation amount Pt' and the reference power generation amount Pr' each measured, for example, at the same time after the change of the output control parameter S described above are measured under the same wind condition. In addition, likewise, the criterial correlation Cr is the correlation between the target power generation amount Pt and the reference power generation amount Pr measured under the same wind condition before the change of the output control parameter S described above. Accordingly, using the criterial correlation Cr, it is possible to estimate the target power generation amount Pt before the change described above, which may be obtained under the wind condition when the above-described reference power generation amount Pr' after the change is measured. Therefore, it is possible to evaluate that the estimated value before the change Pa of the target power generation amount Pt before the change which is thus obtained and the measurement value of the target power generation amount Pt' after the change are the power generation amounts on the same wind condition. Thus, comparing the both, it is possible to easily evaluate how the target power generation amount Pa' after the change is, as compared with that before the change without obtaining a power generation amount from a measured wind speed.

In some embodiments, the set value changing unit 3 may change the set value of the output control parameter S of at least one wind turbine T positioned on the upwind side in the wind direction D in the target wind turbine group Gt described above. In the embodiments shown in FIGS. 1 to 3, an object whose output control parameter S is to be changed at least includes the wind turbine T positioned on the most upwind side in the target wind turbine group Gt. More specifically, the wind turbine T positioned on the most upwind side is the wind turbine T indicated by reference character T1 in FIG. 1, is the wind turbine T indicated by reference character T4 in FIG. 4, and is the wind turbine T indicated by reference character T6 in FIG. 5. The target wind turbine group Gt and the reference wind turbine group Gr include the wind turbines T positioned at the ends of the wind farm 8, and thus the wind turbine T whose output control parameter S is to be changed may be the wind turbine T positioned on the most upwind side in the wind farm 8.

With the above configuration, the wind turbine T whose output control parameter S is to be changed is one or the plurality of wind turbines positioned on the upwind side, for example, the wind turbine positioned on the most upwind side in the target wind turbine group Gt. Compared to the front wind turbines disposed on the upwind side, the back wind turbines disposed on the downwind side normally have a smaller power generation output due to the influence of wake of the front wind turbines. Moreover, it is known that each wind turbine generates power most efficiently in the region positioned midway between the cut-in wind speed and the rated wind speed. Thus, if the power generation amount of the front wind turbines is, for example, decreased, the back wind turbines can utilize more wind energy by the decreased power generation amount of the front wind turbines. Accordingly, the power generation amount of each of the wind turbines T changes, making it possible to achieve optimization of the power generation amount of the target wind turbine group GT, such as maximization of the target power generation amount Pt, through such adjustment of the power generation amount.

Next, the criterial correlation generation unit 7 generating the criterial correlation Cr described above and some embodiments related thereto will be described.

In some embodiments, the wind turbine group power generation amount evaluation device 1 may further include the criterial correlation generation unit 7 that generates the criterial correlation Cr for each of a plurality of combinations C of the target wind turbine group Gt and the reference wind turbine group Gr which have members determined in advance in accordance with the plurality of wind directions D. In this case, the above-described criterial correlation acquisition unit 2 acquires the criterial correlation Cr with respect to each of the above-described combinations C according to a corresponding one of the wind directions D acquired by the above-described wind direction acquisition unit 12. The above-described plurality of wind directions D may be, for example, the directions of wind blowing from the four cardinal directions of north, south, east, and west which divide 360°C into quarters or the eight intercardinal directions of north, south, east, west, northeast, southeast, southwest, and northwest which divide 360°C into eight directions.

Once the wind directions D are determined, it is possible to determine the target wind turbine group Gt and the reference wind turbine group Gr in accordance with the wind directions D. Thus, it is possible to predetermine each of the combinations C of the target wind turbine group Gt and the reference wind turbine group Gr according to the corresponding one of the above-described plurality of wind directions D. In addition, it is possible to quickly perform a process after the measurement result of the wind direction D is acquired by the above-described wind direction acquisition unit 12, if each of the above-described combinations C is determined with respect to the corresponding one of the plurality of assumed wind directions D. That is, it is possible to quickly obtain the respective members of the target wind turbine group Gt and the reference wind turbine group Gr based on management information I which associates, for example, the plurality of wind directions D and the above-described combinations C determined in accordance with the respective wind directions D, without performing a process of determining the respective members of the target wind turbine group Gt and the reference wind turbine group Gr. Furthermore, once the criterial correlation Cr according to each of the above-described combinations C is generated in advance, and the corresponding one of the wind directions D is determined, preparing the management information I associated so as to obtain the criterial correlation Cr and the respective members of the target wind turbine group Gt and the reference wind turbine group Gr, it is possible to quickly acquire the criterial correlation Cr in the above-described combination C with respect to the acquired with direction D as well after obtaining the said combination C.

In the embodiments shown in FIGS. 1 to 3, the above-described plurality of criterial correlations Cr are generated at a stage prior to evaluation (learning period). Moreover, the management information I is generated which associates, with each other, the plurality of assumed wind directions D, the above-described combinations C determined in accordance with the wind directions D, and the criterial correlation Cr generated in advance through measurement for each of the above-described combinations C. The management information I is stored in the storage device m of the wind turbine group power generation amount evaluation device 1 together with the criterial correlation Cr for each of the above-described combinations C. Then, once the wind direction D is input from the wind direction acquisition unit 12 to the criterial correlation acquisition unit 2, the criterial correlation acquisition unit 2 specifies the criterial correlation Cr corresponding to the above-described combination C according to the input wind direction D by using the management information I, and acquires the specified criterial correlation Cr (Cr[D] of FIG. 3) from the storage device m.

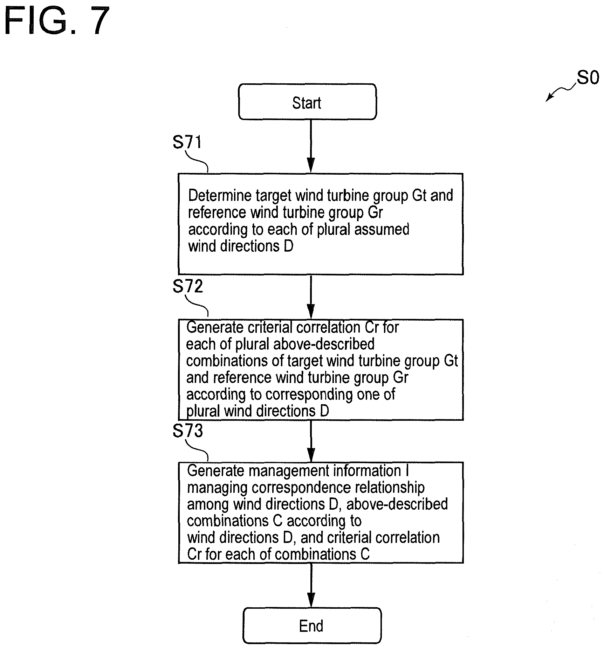

Moreover, the above-described management information I may be generated as shown in FIG. 7. FIG. 7 is a flowchart of pre-processing (S0) according to an embodiment of the present invention. In the embodiment shown in FIG. 7, in step S71 of FIG. 7, the target wind turbine group Gt and the reference wind turbine group Gr according to each of the plurality of assumed wind directions D are determined. In step S72, the criterial correlation Cr for each of the plurality of above-described combinations of the target wind turbine group Gt and the reference wind turbine group Gr according to the corresponding one of the plurality of wind directions D. Then, in step S73, the wind directions D, the above-described combinations C according to the wind directions D, and the criterial correlation Cr for each of the combinations C are associated with each other to generate the management information I.

With the above configuration, the combinations C of the target wind turbine group Gt and the reference wind turbine group Gr are determined with respect to the plurality of assumed wind directions D, the criterial correlation Cr for each of the combinations C is generated, and the above-described evaluation is made by using the criterial correlation Cr according to the acquired wind direction D. Thus, it is possible to quickly make the above-described evaluation according to the wind direction D.

Furthermore, in some embodiments, the wind turbine group power generation amount evaluation device 1 may further include the above-described criterial correlation generation unit 7 and a wind direction change detection unit 14 which detects a change in the wind direction D. In this case, the above-described criterial correlation acquisition unit 2 acquires the criterial correlation Cr according to the changed wind direction D if the change in the wind direction D is detected. That is, the above-described evaluation is made if the change in the wind direction D is detected.

The wind direction change detection unit 14 may be configured to detect the change in the wind direction D if it is determined that the wind direction D is different from how it was before during a predetermined time period. If the wind direction D continuously changes at short time intervals, it may be inappropriate to determine that the wind direction D has changed every time the change is made, and to make the above-described evaluation. Thus, if it is determined that the wind direction D has changed, the target power generation amount Pt by the target wind turbine group Gt determined in accordance with the changed wind direction D is evaluated by using the reference power generation amount Pr by the reference wind turbine group Gr determined in accordance with the changed wind direction D.

More specifically, wind blowing from any direction of 360-degree direction is classified into any of the plurality of wind directions D obtained through division by the predetermined number such as four cardinal directions or the eight intercardinal directions. For example, if the plurality of wind directions D are classified into the four cardinal directions of 0° in the north, 90° in the south, 45° in the east, and 135° in the west, wind may be classified based on a comparison with a threshold determined in accordance with the four cardinal directions, such as wind is classified into the north if the cardinal point of the measured wind is greater than -22.5° and not greater than 22.5°.

Then, it may be determined that the wind direction D has changed if, for example, the wind direction D is measured at measurement intervals such as periodically, and the wind direction D which is different from the current wind direction D is obtained for a predetermined time period (for example, 30 minutes) which is longer than the above-described measurement intervals. Alternatively, it may be determined that the wind direction D has changed if a change occurs in a moving average of the measurement value at predetermined intervals (for example, 1-degree intervals) of the wind direction D measured periodically. It is possible to reduce the influence of noise by thus causing delay in the change of the wind direction which is obtained little by little as compared with that in the case of the classification by the cardinal points.

With the above configuration, it is possible to acquire the criterial correlation between the target power generation amount of the reference wind turbine group and the target power generation amount of the target wind turbine group according to the changed wind direction which is, for example, determined in advance in accordance with the change in the wind direction D. Thus, triggered by the change in the wind direction, it is possible to evaluate the target power generation amount by the target wind turbine group Gt described above.

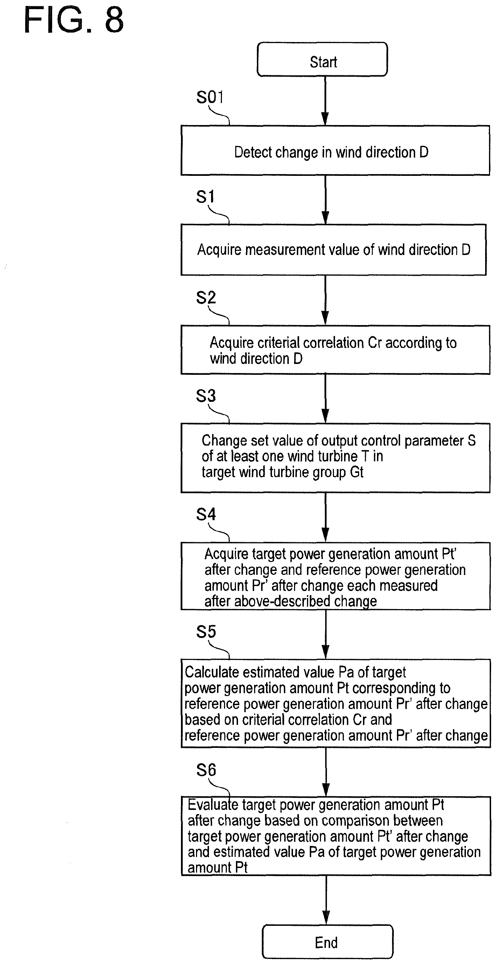

A wind turbine group power generation amount evaluation method corresponding to the process performed by the wind turbine group power generation amount evaluation device 1 described above will be described below with reference to FIG. 8. FIG. 8 is a flowchart of the wind turbine group power generation amount evaluation method according to an embodiment of the present invention.

The wind turbine group power generation amount evaluation method is the method for evaluating the power generation amount of the wind turbine group including the plurality of wind turbines T (the target power generation amount Pt by the target wind turbine group Gt). As shown in FIG. 8, the wind turbine group power generation amount evaluation method includes a wind direction acquisition step, a criterial correlation acquisition step, a set value changing step, a power generation amount after change acquisition step, a target power generation amount estimation step, and an evaluation step.

Each of the above steps will be described along the flow of FIG. 8.

In step S1 of FIG. 8, the wind direction acquisition step is performed. The wind direction acquisition step (S1) is a step of acquiring the wind direction D which acts on the wind turbine groups including the target wind turbine group Gt and the reference wind turbine group Gr. The wind direction acquisition step (S1) is the same as the processing contents performed by the wind direction acquisition unit 12 described above, and thus the details of which will be omitted.

In step S2 of FIG. 8, the criterial correlation acquisition step is performed. The criterial correlation acquisition step (S2) is a step of acquiring the criterial correlation Cr between the target power generation amount Pt by the target wind turbine group Gt according to the wind direction D acquired in the above-described wind direction acquisition step (S1) and the reference power generation amount Pr by the reference wind turbine group Gr according to the said wind direction D. The criterial correlation acquisition step (S2) is the same as the processing contents performed by the criterial correlation acquisition unit 2 described above, and thus the details of which will be omitted.

In step S3 of FIG. 8, the set value changing step is performed. The set value changing step (S3) is a step of changing the set value of the output control parameter S of at least one wind turbine T in the target wind turbine group Gt. The set value changing step (S3) is the same as the processing contents performed by the set value changing unit 3 described above, and thus the details of which will be omitted.

In step S4 of FIG. 8, the power generation amount after change acquisition step (S4) is performed. The power generation amount after change acquisition step (S4) is a step of acquiring the target power generation amount Pt' after the change and the reference power generation amount Pr' after the change each measured after the set value is changed in the above-described set value changing step (S3). The power generation amount after change acquisition step (S4) is the same as the processing contents performed by the power generation amount acquisition unit 4 described above, and thus the details of which will be omitted.

In step S5 of FIG. 8, the target power generation amount estimation step (S5) is performed. The target power generation amount estimation step (S5) is a step of calculating the above-described estimated value before the change Pa corresponding to the reference power generation amount Pr' after the change based on the criterial correlation Cr and the reference power generation amount Pr' after the change. The target power generation amount estimation step (S5) is the same as the processing contents performed by the target power generation amount estimation unit 5 described above, and thus the details of which will be omitted.

In step S6 of FIG. 8, the evaluation step (S6) is performed. The evaluation step (S6) is the step of evaluating the target power generation amount Pt' after the change based on the comparison between the target power generation amount Pt' after the change and the above-described estimated value before the change Pa. The evaluation step (S6) is the same as the processing contents performed by the evaluation unit 6 described above, and thus the details of which will be omitted.

In the embodiment shown in FIG. 8, the criterial correlation acquisition step (S2) is performed before the set value changing step (S3). However, the criterial correlation acquisition step (S2) may be performed at any stage after the wind direction acquisition step (SI) and before the target power generation amount estimation step (S5).

Moreover, in some embodiments, the wind turbine group power generation amount evaluation method may further include the criterial correlation generation step (S72 of FIG. 7) of generating the criterial correlation Cr for each of the plurality of combinations C of the target wind turbine group Gt and the reference wind turbine group Gr described above, which is determined in accordance with the corresponding one of the wind directions D. The criterial correlation generation step (S72 of FIG. 7) is the same as the processing contents performed by the criterial correlation generation unit 7 described above, and thus the details of which will be omitted. In the embodiment shown in FIG. 8, the above-described criterial correlation generation step (S72 of FIG. 7) is performed before the above-described wind direction acquisition step (S1). Then, the above-described criterial correlation acquisition step (S2) includes acquiring the criterial correlation Cr with respect to each of the combinations C according to the corresponding to one of the wind directions D acquired in the wind direction acquisition step (S1).

Furthermore, in some embodiments, as shown in FIG. 8, the wind turbine group power generation amount evaluation method may further include the above-described criterial correlation generation step (S72 of FIG. 7) and a wind direction change detection step (S01) of detecting the change in the wind direction D. The wind direction change detection step (S01) is the same as the processing contents performed by the wind direction change detection unit 14 described above, and thus the details of which will be omitted. In the embodiment shown in FIG. 8, the criterial correlation generation step (S72 of FIG. 7) is performed as the stage prior to the above-described evaluation. After that, the respective steps of the flowchart in FIG. 8 are performed when the above-described evaluation is actually made. Moreover, the above-described criterial correlation acquisition step (S2) acquires the criterial correlation Cr according to the changed wind direction D if the change in the wind direction D is detected in the wind direction change detection step (S01).

The present invention is not limited to the above-described embodiment, and also includes an embodiment obtained by modifying the above-described embodiment and an embodiment obtained by combining these embodiments as appropriate.

## Claims

1. A wind turbine group power generation amount evaluation device (1) for evaluating a power generation amount of a wind turbine group including a plurality of wind turbines, comprising:
a wind direction acquisition unit (12) configured to acquire a wind direction (D) acting on the wind turbine group;
a criterial correlation acquisition unit (2) configured to acquire a criterial correlation which is a correlation between a target power generation amount (Pt) by a target wind turbine group (Gt) and a reference power generation amount (Pr) by a reference wind turbine group (Gr), the target wind turbine group (Gt) being the wind turbine group of an evaluation target having, as members, n wind turbines disposed along the acquired wind direction (D), n being an integer greater than or equal to 2, the reference wind turbine group (Gr) having, as members, the wind turbines which are not the members of the target wind turbine group (Gt) and are disposed along the wind direction (D), the reference wind turbine group (Gr) being disposed in parallel to the target wind turbine group (Gt);
a set value changing unit (3) configured to change a set value of an output control parameter (S) of at least one of the wind turbines (T) in the target wind turbine group (Gt);
a power generation amount acquisition unit (4) configured to acquire the target power generation amount (Pt) and the reference power generation amount (Pr) measured after the change in the set value;
a target power generation amount estimation unit (5) configured to calculate, based on the criterial correlation and the reference power generation amount (Pr') acquired after the change, an estimated value before the change of the target power generation amount (Pt) which corresponds to the reference power generation amount (Pr') acquired after the change; and
an evaluation unit (6) configured to evaluate a target power generation amount (Pt') after the change based on a comparison between the target power generation amount (Pt') after the change and the estimated value before the change.

2. The wind turbine group power generation amount evaluation device (1) according to claim 1,
wherein the set value changing unit (3) changes the set value of the output control parameter (5) of at least one of the wind turbines (T) positioned on an upwind side in the wind direction (D) in the target wind turbine group (Gt).

3. The wind turbine group power generation amount evaluation device (1) according to claim 1 or 2, further comprising a criterial correlation generation unit (7) configured to generate the criterial correlation for each of a plurality of combinations of the target wind turbine group (Gt) and the reference wind turbine group (Gr) each having the members determined in advance in accordance with a corresponding one of a plurality of wind directions (D),
wherein the criterial correlation acquisition unit (2) acquires the criterial correlation with respect to the combinations according to the acquired wind direction (D).

4. The wind turbine group power generation amount evaluation device (1) according to any one of claims 1 to 3, further comprising a criterial correlation generation unit (7) configured to generate the criterial correlation for each of a plurality of combinations of the target wind turbine group (Gt) and the reference wind turbine group (Gr) each having the members determined in accordance with a corresponding one of a plurality of wind directions (D), and
a wind direction change detection unit (14) configured to detect a change in the wind direction (D),
wherein, if the change in the wind direction (D) is detected, the criterial correlation acquisition unit (2) acquires the criterial correlation according to the wind direction (D) after the change.

5. The wind turbine group power generation amount evaluation device (1) according to any one of claims 1 to 4, further comprising a setting adoption unit (62) configured to specify, based on an evaluation result of the evaluation unit (6), a position of a setting change wind turbine and to change a set value of the output control parameter of the wind turbine (T) in the reference wind turbine group (Gr) corresponding to the specified position to the set value after the setting change wind turbine is changed, the setting change wind turbine being the wind turbine (T) whose set value of the output control parameter (S) is changed in the target wind turbine group (Gt).

6. A wind turbine group power generation amount evaluation method of evaluating a power generation amount of a wind turbine group including a plurality of wind turbines, comprising:
a step of acquiring a wind direction (D) acting on the wind turbine group;
a step of acquiring a criterial correlation which is a correlation between a target power generation amount (Pt) by a target wind turbine group (Gt) and a reference power generation amount (Pr) by a reference wind turbine group (Gr), the target wind turbine group (Gt) being the wind turbine group of an evaluation target having, as members, n wind turbines disposed along the acquired wind direction (D), n being an integer greater than or equal to 2, the reference wind turbine group (Gr) having, as members, the wind turbines which are not the members of the target wind turbine group (Gt) and are disposed along the wind direction (D), the reference wind turbine group (Gr) being disposed in parallel to the target wind turbine group (Gt);
a step of changing a set value of an output control parameter (S) of at least one of the wind turbines (T) in the target wind turbine group (Gt);
a step of acquiring the target power generation amount (Pt) and the reference power generation amount (Pr) measured after the change in the set value;
a step of calculating, based on the criterial correlation and the reference power generation amount (Pr') acquired after the change, an estimated value before the change of the target power generation amount (Pt) which corresponds to the reference power generation amount (Pr') acquired after the change; and
a step of evaluating a target power generation amount (Pt') after the change based on a comparison between the target power generation amount (Pt') after the change and the estimated value before the change.

7. A wind turbine group power generation amount evaluation program for evaluating a power generation amount of a wind turbine group including a plurality of wind turbines,
the program causing a computer to implement:
a unit configured to acquire a wind direction (D) acting on the wind turbine group;
a unit configured to acquire a criterial correlation which is a correlation between a target power generation amount (Pt) by a target wind turbine group (Gt) and a reference power generation amount (Pr) by a reference wind turbine group (Gr), the target wind turbine group (Gt) being the wind turbine group of an evaluation target having, as members, n wind turbines disposed along the acquired wind direction (D), n being an integer greater than or equal to 2, the reference wind turbine group (Gr) having, as members, the wind turbines which are not the members of the target wind turbine group (Gt) and are disposed along the wind direction (D), the reference wind turbine group (Gr) being disposed in parallel to the target wind turbine group (Gt);
a unit configured to change a set value of an output control parameter (S) of at least one of the wind turbines (T) in the target wind turbine group (Gt);
a unit configured to acquire the target power generation amount (Pt) and the reference power generation amount (Pr) measured after the change in the set value;
a unit configured to calculate, based on the criterial correlation and the reference power generation amount (Pr') acquired after the change, an estimated value before the change of the target power generation amount (Pt) which corresponds to the reference power generation amount (Pr') acquired after the change; and
a unit configured to evaluate a target power generation amount (Pt') after the change based on a comparison between the target power generation amount (Pt') after the change and the estimated value before the change.

## Patentansprüche

1. Eine Bewertungsvorrichtung (1) einer Energieerzeugungsmenge einer Windturbinengruppe zur Bewertung der Energieerzeugungsmenge der Windturbinengruppe, die eine Vielzahl von Windturbinen umfasst, aufweisend:
eine Windrichtungserfassungseinheit (12), die konfiguriert ist, um eine Windrichtung (D) zu erfassen, die auf die Windturbinengruppe wirkt;
eine Kriterienkorrelationserfassungseinheit (2), die konfiguriert ist, um eine Kriterienkorrelation zu erfassen, die eine Korrelation zwischen einer Zielenergieerzeugungsmenge (Pt) durch eine Zielwindturbinengruppe (Gt) und einer Referenzenergieerzeugungsmenge (Pr) durch eine Referenzwindturbinengruppe (Gr) ist, wobei die Zielwindturbinengruppe (Gt) die Windturbinengruppe eines Bewertungsziels ist, die als Mitglieder n Windturbinen aufweist, die entlang der erfassten Windrichtung (D) angeordnet sind, wobei n eine ganze Zahl größer oder gleich 2 ist, wobei die Referenzwindturbinengruppe (Gr) als Mitglieder die Windturbinen aufweist, die nicht die Mitglieder der Zielwindturbinengruppe (Gt) sind und entlang der Windrichtung (D) angeordnet sind, wobei die Referenzwindturbinengruppe (Gr) parallel zu der Zielwindturbinengruppe (Gt) angeordnet ist;
eine Eingestellter-Wert-Änderungseinheit (3), die konfiguriert ist, um einen eingestellten Wert eines Ausgangssteuerparameters (S) von zumindest einer der Windturbinen (T) in der Zielwindturbinengruppe (Gt) zu ändern;
eine Energieerzeugungsmengen-Erfassungseinheit (4), die konfiguriert ist, um die Zielenergieerzeugungsmenge (Pt) und die Referenzenergieerzeugungsmenge (Pr) zu erfassen, die nach der Änderung des eingestellten Wertes gemessen wurden;
eine Zielenergieerzeugungsmengen-Schätzeinheit (5), die konfiguriert ist, um basierend auf der Kriterienkorrelation und der nach der Änderung erfassten Referenzenergieerzeugungsmenge (Pr') einen Schätzwert vor der Änderung der Zielenergieerzeugungsmenge (Pt) zu berechnen, der zu der nach der Änderung erfassten Referenzenergieerzeugungsmenge (Pr') korrespondiert; und
eine Bewertungseinheit (6), die konfiguriert ist, um eine Zielenergieerzeugungsmenge (Pt') nach der Änderung basierend auf einem Vergleich zwischen der Zielenergieerzeugungsmenge (Pt') nach der Änderung und dem Schätzwert vor der Änderung zu bewerten.

2. Die Bewertungsvorrichtung (1) der Energieerzeugungsmenge der Windturbinengruppe nach Anspruch 1,
wobei die Eingestellter-Wert-Änderungseinheit (3) den eingestellten Wert des Ausgangssteuerparameters (5) von zumindest einer der Windturbinen (T) ändert, die auf einer Aufwindseite in der Windrichtung (D) in der Zielwindturbinengruppe (Gt) positioniert sind.

3. Die Bewertungsvorrichtung (1) der Energieerzeugungsmenge der Windturbinengruppe nach Anspruch 1 oder 2, ferner mit einer Kriterienkorrelationserzeugungseinheit (7), die konfiguriert ist, um die Kriterienkorrelation für jede einer Vielzahl von Kombinationen der Zielwindturbinengruppe (Gt) und der Referenzwindturbinengruppe (Gr) zu erzeugen, wobei die Mitglieder jeweils im Voraus gemäß einer korrespondierenden aus einer Vielzahl von Windrichtungen (D) bestimmt werden,
wobei die Kriterienkorrelationserfassungseinheit (2) die Kriterienkorrelation mit Bezug auf die Kombinationen gemäß der erfassten Windrichtung (D) erfasst.

4. Die Bewertungsvorrichtung (1) der Energieerzeugungsmenge der Windturbinengruppe nach einem der Ansprüche 1 bis 3, ferner mit einer Kriterienkorrelationserzeugungseinheit (7), die konfiguriert ist, um die Kriterienkorrelation für jede einer Vielzahl von Kombinationen der Zielwindturbinengruppe (Gt) und der Referenzwindturbinengruppe (Gr) zu erzeugen, wobei die Mitglieder jeweils gemäß einer korrespondierenden aus einer Vielzahl von Windrichtungen (D) bestimmt werden, und
eine Windrichtungsänderungs-Erfassungseinheit (14), die konfiguriert ist, um eine Änderung in der Windrichtung (D) zu erfassen,
wobei, falls die Änderung der Windrichtung (D) erfasst wird, die Kriterienkorrelationserfassungseinheit (2) die Kriterienkorrelation gemäß der Windrichtung (D) nach der Änderung erfasst.

5. Die Bewertungsvorrichtung (1) der Energieerzeugungsmenge der Windturbinengruppe nach einem der Ansprüche 1 bis 4, ferner mit einer Einstellungsanpassungseinheit (62), die konfiguriert ist, um basierend auf einem Bewertungsergebnis der Bewertungseinheit (6) eine Position einer Einstellungsänderungs-Windturbine zu spezifizieren und einen eingestellten Wert des Ausgangssteuerparameters der Windturbine (T) in der Referenzwindturbinengruppe (Gr), die zu der spezifizierten Position korrespondiert, auf den eingestellten Wert zu ändern, nachdem die Einstellungsänderungs-Windturbine geändert wurde, wobei die Einstellungsänderungs-Windturbine die Windturbine (T) ist, deren eingestellter Wert des Ausgangssteuerparameters (S) in der Zielwindturbinengruppe (Gt) geändert wird.

6. Ein Bewertungsverfahren einer Energieerzeugungsmenge einer Windturbinengruppe zum Bewerten der Energieerzeugungsmenge der Windturbinengruppe, die eine Vielzahl von Windturbinen umfasst, aufweisend:
einen Schritt zum Erfassen einer Windrichtung (D), die auf die Windturbinengruppe wirkt;
einen Schritt zum Erfassen einer Kriterienkorrelation, die eine Korrelation zwischen einer Zielenergieerzeugungsmenge (Pt) durch eine Zielwindturbinengruppe (Gt) und einer Referenzenergieerzeugungsmenge (Pr) durch eine Referenzwindturbinengruppe (Gr) ist, wobei die Zielwindturbinengruppe (Gt) die Windturbinengruppe eines Bewertungsziels ist, die als Mitglieder n Windturbinen aufweist, die entlang der erfassten Windrichtung (D) angeordnet sind, wobei n eine ganze Zahl größer oder gleich 2 ist, wobei die Referenzwindturbinengruppe (Gr) als Mitglieder die Windturbinen aufweist, die nicht die Mitglieder der Zielwindturbinengruppe (Gt) sind und entlang der Windrichtung (D) angeordnet sind, wobei die Referenzwindturbinengruppe (Gr) parallel zu der Zielwindturbinengruppe (Gt) angeordnet ist;
einen Schritt zum Ändern eines eingestellten Wertes eines Ausgangssteuerparameters (S) von zumindest einer der Windturbinen (T) in der Zielwindturbinengruppe (Gt);
einen Schritt zum Erfassen der Zielenergieerzeugungsmenge (Pt) und der Referenzenergieerzeugungsmenge (Pr), die nach der Änderung des eingestellten Wertes gemessen werden;
einen Schritt zum Berechnen, basierend auf der Kriterienkorrelation und der nach der Änderung erfassten Referenzenergieerzeugungsmenge (Pr'), eines Schätzwertes vor der Änderung der Zielenergieerzeugungsmenge (Pt), der zu der nach der Änderung erfassten Referenzenergieerzeugungsmenge (Pr') korrespondiert; und
einen Schritt zum Bewerten einer Zielenergieerzeugungsmenge (Pt') nach der Änderung basierend auf einem Vergleich zwischen der Zielenergieerzeugungsmenge (Pt') nach der Änderung und dem Schätzwert vor der Änderung.

7. Ein Bewertungsprogramm einer Energieerzeugungsmenge einer Windturbinengruppe zur Bewertung der Energieerzeugungsmenge der Windturbinengruppe, die eine Vielzahl von Windturbinen umfasst,
wobei das Programm einen Computer veranlasst, Folgendes zu implementieren:
eine Einheit, die konfiguriert ist, um eine Windrichtung (D) zu erfassen, die auf die Windturbinengruppe wirkt;
eine Einheit, die konfiguriert ist, um eine Kriterienkorrelation zu erfassen, die eine Korrelation zwischen einer Zielenergieerzeugungsmenge (Pt) durch eine Zielwindturbinengruppe (Gt) und einer Referenzenergieerzeugungsmenge (Pr) durch eine Referenzwindturbinengruppe (Gr) ist, wobei die Zielwindturbinengruppe (Gt) die Windturbinengruppe eines Bewertungsziels ist, die als Mitglieder n Windturbinen aufweist, die entlang der erfassten Windrichtung (D) angeordnet sind, wobei n eine ganze Zahl größer oder gleich 2 ist, wobei die Referenzwindturbinengruppe (Gr) als Mitglieder die Windturbinen aufweist, die nicht die Mitglieder der Zielwindturbinengruppe (Gt) sind und entlang der Windrichtung (D) angeordnet sind, wobei die Referenzwindturbinengruppe (Gr) parallel zu der Zielwindturbinengruppe (Gt) angeordnet ist;
eine Einheit, die konfiguriert ist, um einen eingestellten Wert eines Ausgangssteuerparameters (S) von zumindest einer der Windturbinen (T) in der Zielwindturbinengruppe (Gt) zu ändern;
eine Einheit, die konfiguriert ist, um die Zielenergieerzeugungsmenge (Pt) und die Referenzenergieerzeugungsmenge (Pr) zu erfassen, die nach der Änderung des eingestellten Wertes gemessen wurden;
eine Einheit, die konfiguriert ist, um basierend auf der Kriterienkorrelation und der nach der Änderung erfassten Referenzenergieerzeugungsmenge (Pr') einen Schätzwert vor der Änderung der Zielenergieerzeugungsmenge (Pt) zu berechnen, der zu der nach der Änderung erfassten Referenzenergieerzeugungsmenge (Pr') korrespondiert; und
eine Einheit, die konfiguriert ist, um eine Zielenergieerzeugungsmenge (Pt') nach der Änderung basierend auf einem Vergleich zwischen der Zielenergieerzeugungsmenge (Pt') nach der Änderung und dem Schätzwert vor der Änderung zu bewerten.

## Revendications

1. Dispositif d'évaluation de la quantité de génération d'énergie de groupe d'éoliennes (1) pour évaluer une quantité de génération d'énergie d'un groupe d'éoliennes comportant une pluralité d'éoliennes, comprenant :
une unité d'acquisition de direction de vent (12) configurée pour acquérir une direction de vent (D) agissant sur le groupe d'éoliennes ;
une unité d'acquisition de corrélation de critères (2) configurée pour acquérir une corrélation de critères qui est une corrélation entre une quantité de génération d'énergie cible (Pt) par un groupe d'éoliennes cible (Gt) et une quantité de génération d'énergie de référence (Pr) par un groupe d'éoliennes de référence (Gr), le groupe d'éoliennes cible (Gt) étant le groupe d'éoliennes d'une cible d'évaluation ayant, pour éléments constitutifs, n éoliennes disposées selon la direction de vent acquise (D), n étant un entier supérieur ou égal à 2, le groupe d'éoliennes de référence (Gr) ayant, pour éléments constitutifs, les éoliennes qui ne sont pas les éléments constitutifs du groupe d'éoliennes cible (Gt) et sont disposées selon la direction de vent (D), le groupe d'éoliennes de référence (Gr) étant disposé en parallèle au groupe d'éoliennes cible (Gt) ;
une unité de changement de valeur de consigne (3) configurée pour changer une valeur de consigne d'un paramètre de commande de sortie (S) d'au moins une des éoliennes (T) dans le groupe d'éoliennes cible (Gt) ;
une unité d'acquisition de quantité de génération d'énergie (4) configurée pour acquérir la quantité de génération d'énergie cible (Pt) et la quantité de génération d'énergie de référence (Pr) mesurées après le changement de la valeur de consigne ;
une unité d'estimation de quantité de génération d'énergie cible (5) configurée pour calculer, sur la base de la corrélation de critères et de la quantité de génération d'énergie de référence (Pr') acquise après le changement, une valeur estimée avant le changement de la quantité de génération d'énergie cible (Pt) qui correspond à la quantité de génération d'énergie de référence (Pr') acquise après le changement ; et
une unité d'évaluation (6) configurée pour évaluer une quantité de génération d'énergie cible (Pt') après le changement sur la base d'une comparaison entre la quantité de génération d'énergie cible (Pt') après le changement et la valeur estimée avant le changement.

2. Dispositif d'évaluation de la quantité de génération d'énergie de groupe d'éoliennes (1) selon la revendication 1,
dans lequel l'unité de changement de valeur de consigne (3) change la valeur de consigne du paramètre de commande de sortie (5) d'au moins l'une des éoliennes (T) positionnée sur un côté exposé au vent dans la direction de vent (D) dans le groupe d'éoliennes cible (Gt).

3. Dispositif d'évaluation de la quantité de génération d'énergie de groupe d'éoliennes (1) selon la revendication 1 ou 2, comprenant en outre une unité de génération de corrélation de critères (7) configurée pour générer la corrélation de critères pour chacune d'une pluralité de combinaisons du groupe d'éoliennes cible (Gt) et le groupe d'éoliennes de référence (Gr) ayant chacun les éléments constitutifs déterminés à l'avance conformément à l'une correspondante d'une pluralité de directions de vent (D),
dans lequel l'unité d'acquisition de corrélation de critères (2) acquiert la corrélation de critères par rapport aux combinaisons en fonction de la direction de vent acquise (D).

4. Dispositif d'évaluation de la quantité de génération d'énergie de groupe d'éoliennes (1) selon l'une quelconque des revendications 1 à 3, comprenant en outre une unité de génération de corrélation de critères (7) configurée pour générer la corrélation de critères pour chacune d'une pluralité de combinaisons du groupe d'éoliennes (Gt) et le groupe d'éoliennes de référence (Gr) ayant chacun les éléments constitutifs déterminés conformément à l'une correspondante d'une pluralité de directions de vent (D), et
une unité de détection de changement de direction de vent (14) configurée pour détecter un changement de direction de vent (D),
dans lequel, si le changement de direction de vent (D) est détecté, l'unité d'acquisition de corrélation de critères (2) acquiert la corrélation de critères selon la direction de vent (D) après le changement.

5. Dispositif d'évaluation de la quantité de génération d'énergie de groupe d'éoliennes (1) selon l'une quelconque des revendications 1 à 4, comprenant en outre une unité d'adoption de réglage (62) configurée pour spécifier, sur la base d'un résultat d'évaluation de l'unité d'évaluation (6), une position d'une éolienne à changement de réglage et pour changer une valeur de réglage du paramètre de commande de sortie de l'éolienne (T) dans le groupe d'éoliennes de référence (Gr) correspondant à la position spécifiée en la valeur de réglage après que l'éolienne à changement de réglage est changée, l'éolienne à changement de réglage étant l'éolienne (T) dont la valeur de consigne du paramètre de commande de sortie (S) est changée dans le groupe d'éoliennes cible (Gt).

6. Procédé d'évaluation de la quantité de génération d'énergie de groupe d'éoliennes pour évaluer une quantité de génération d'énergie d'un groupe d'éoliennes comportant une pluralité d'éoliennes, comprenant :
une étape d'acquisition d'une direction de vent (D) agissant sur le groupe d'éoliennes ;
une étape d'acquisition d'une corrélation de critères qui est une corrélation entre une quantité de génération d'énergie cible (Pt) par un groupe d'éoliennes cible (Gt) et une quantité de génération d'énergie de référence (Pr) par un groupe d'éoliennes de référence (Gr), le groupe d'éoliennes cible (Gt) étant le groupe d'éoliennes d'une cible d'évaluation ayant, pour éléments constitutifs, n éoliennes disposées selon la direction de vent acquise (D), n étant un entier supérieur ou égal à 2, le groupe d'éoliennes de référence (Gr) ayant, pour éléments constitutifs, les éoliennes qui ne sont pas les éléments constitutifs du groupe d'éoliennes cible (Gt) et sont disposées selon la direction de vent (D), le groupe d'éoliennes de référence (Gr) étant disposé parallèlement au groupe d'éoliennes cible (Gt) ;
une étape de changement d'une valeur de consigne d'un paramètre de commande de sortie (S) d'au moins l'une des éoliennes (T) dans le groupe d'éoliennes cible (Gt) ;
une étape d'acquisition de la quantité de génération d'énergie cible (Pt) et de la quantité de génération d'énergie de référence (Pr) mesurées après le changement de valeur de consigne ;
une étape de calcul, sur la base de la corrélation de critères et de la quantité de génération d'énergie de référence (Pr') acquise après changement, d'une valeur estimée avant le changement de la quantité de génération d'énergie cible (Pt) qui correspond à la quantité de génération d'énergie de référence (Pr') acquise après le changement ; et
une étape d'évaluation d'une quantité de génération d'énergie cible (Pt') après le changement sur la base d'une comparaison entre la quantité de génération d'énergie cible (Pt) après le changement et la valeur estimée avant le changement.

7. Programme d'évaluation de la quantité de génération d'énergie de groupe d'éoliennes pour évaluer une quantité de génération d'énergie de groupe d'éoliennes comportant une pluralité d'éoliennes,
le programme amenant un ordinateur à mettre en œuvre :
une unité configurée pour acquérir une direction de vent (D) agissant sur le groupe d'éoliennes ;
une unité configurée pour acquérir une corrélation de critères qui est une corrélation entre une quantité de génération d'énergie cible (Pt) par un groupe d'éoliennes cible (Gt) et une quantité de génération d'énergie de référence (Pr) par un groupe d'éoliennes de référence (Gr), le groupe d'éoliennes cible (Gt) étant le groupe d'éoliennes d'une cible d'évaluation ayant, pour éléments constitutifs, n éoliennes disposées selon la direction de vent acquise (D), n étant un nombre entier supérieur ou égal à 2, le groupe d'éoliennes de référence (Gr) ayant, pour éléments constitutifs, les éoliennes qui ne sont pas les éléments constitutifs du groupe d'éoliennes cible (Gt) et sont disposées selon la direction de vent (D), le groupe d'éoliennes de référence (Gr) étant disposé parallèlement au groupe d'éoliennes cible (Gt) ;
une unité configurée pour changer une valeur de consigne d'un paramètre de commande de sortie (S) d'au moins l'une des éoliennes (T) dans le groupe d'éoliennes cible (Gt) ;
une unité configurée pour acquérir la quantité de génération d'énergie cible (Pt) et la quantité de génération d'énergie de référence (Pr) mesurées après le changement de la valeur de consigne ;
une unité configurée pour calculer, sur la base de la corrélation de critères et de la quantité de génération d'énergie de référence (Pr') acquise après le changement, une valeur estimée avant le changement de la quantité de génération d'énergie cible (Pt) qui correspond à la quantité de génération d'énergie de référence (Pr') acquise après le changement ; et
une unité configurée pour évaluer une quantité de génération d'énergie cible (Pt') après le changement sur la base d'une comparaison entre la quantité de génération d'énergie cible (Pt') après le changement et la valeur estimée avant le changement.
